# EUROPEAN PATENT APPLICATION

(11) **EP 4 440 061 A1**
(43) Date of publication of application: **02.10.2024**
(21) Application number: 24165785.7
(22) Date of filing: 25.03.2024
(51) Int. Cl.: H04L 41/0816, H04L 41/0823, H04L 43/0823, H04L 41/5041, H04W 24/02, H04W 28/16, H04L 41/0813, H04L 41/0896

(54) **SERVICE MANAGEMENT**

(30) Priority: 28.03.2023 FI 20235353
(71) Applicant: Telia Company AB, 169 94 Solna (SE)
(72) Inventor: JALKANEN, Tero, 04300 Tuusula (FI); SARAJISTO, Tomi, 00790 Helsinki (FI)
(74) Representative: Berggren Oy

(57) **Abstract**

An implementation is provided in which a core network of a second mobile communication network (150) provides service to a core network of a first mobile communication network (110) in a situation that the core network of the first mobile communication network (110) does not operate as expected. Methods, network devices, computer programs and a system are provided thereto.

## Description

### TECHNICAL FIELD

The invention concerns in general the technical field of telecommunications. More particularly, the invention concerns service management in telecommunication networks.

### BACKGROUND

There are various cases in a provision of services of a mobile communication network that need to be given a special attention. These are at least related to situations causing the mobile communication networks to experience unexpected events that may challenge the operation of them in a desired manner. Such events may be different kinds of crisis situations that put the networks under a heavy pressure at least in terms of load, but also in terms of an operation in general. Such crisis situations may e.g. occur if the network is under a cyber-attack, or if the network experiences a massive system failure, or even a situation in which national borders are temporarily closed which may affect e.g. to IP connectivity to/from the country in question.

An importance of an operation of the mobile communication networks is also recognized by authorities and they have started to set requirements to telecom operators for crisis situations in order to guarantee at least at some level the operation of the communication networks. For example, the authorities require the telecom operators to have a plan for the crisis situations in order to be compliant with so-called Service Continuity Plan (SCP) requirements. The SCP requirements may be understood as a collection of policies, standards, procedures and tools by means which parties, such as the telecom operators, may arrange their operation in order to improve their resilience to major incidents, such as the crisis situations.

There are already some known solutions for preparing and addressing various types of crisis situations. These are based on proprietary mechanisms implemented in the respective network and, thus, there try to solve the crisis situation inside the respective network. These approaches are operative to some extent but they require a huge amount of design and the implementation and the maintenance require a lot of efforts.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present methods, network devices, computer programs and a system for providing service between mobile communication networks.

The objects of the invention are reached by methods, network devices, computer programs and a system as defined by the respective independent claims.

According to a first aspect, a method for controlling a service provision of a first mobile communication network is provided, the method, performed by a control function implemented in a core network of the first mobile communication network, comprises:
determining, on the basis to data descriptive of an operation of a network node of the core network of the first mobile communication network, an indicator value indicative of the operation of the core network of the first mobile communication network,
comparing the indicator value to a reference value,
detecting, in accordance with a comparison between the indicator value and the reference value, if the indicator value deviates from the reference value over a predefined limit, and
generating, in response to a detection that the deviation is over the predefined limit, a control signal to a control function implemented in a core network of a second mobile communication network to request setting up resources in the core network of the second mobile communication network corresponding to the network node of the core network of the first mobile communication network to assign a service provision of the network node of the core network of the first communication network at least in part to occur from the core network of the second mobile communication network set up in response to the request indicated with the control signal.

The data descriptive of the operation of the network node of the first mobile communication network may correspond to data descriptive of signaling of the network node of the first mobile communication network.

For example, the indicator value may be determined to represent an amount of errors occurring in the signaling of the network node of the first mobile communication network.

Furthermore, the method may also comprise:
receiving an acknowledgement from the control function implemented in the core network of the second mobile communication network, the acknowledgement at least comprising data indicating that the resources is set up to provide the network service corresponding to the network service provided by the network node of the core network of the first mobile communication network and data identifying the network node of the core network of the second mobile communication network assigned to the service provision, and
generating a control signal to at least one other network node of the core network of the first mobile communication network to assign the service provision the network node of the core network of the first mobile communication network to the network node of the core network of the second mobile communication network, the control signal carrying at least the data identifying the network node of the core network of the second mobile communication network assigned to the service provision.

Still further, the method may also comprise:
monitoring, in response to assigning the service provision of the network node of the core network of the first communication network at least in part to occur from the core network of the second mobile communication network, the operation of a network node of the core network of the first mobile communication network,
generating, in response to a detection that the operation of the network node of the core network of the first mobile communication network meets at least one requirement, a control signal to the control function of the core network of the second mobile communication network to request a re-provision of the service from the network node of the core network of the first mobile communication network.

According to a second aspect, a network device of a core network of a first mobile communication network is provided, the network device configured to implement a control function, the network device configured to:
determine, on the basis to data descriptive of an operation of a network node of the core network of the first mobile communication network, an indicator value indicative of the operation of the core network of the first mobile communication network,
compare the indicator value to a reference value,
detect, in accordance with a comparison between the indicator value and the reference value, if the indicator value deviates from the reference value over a predefined limit, and
generate, in response to a detection that the deviation is over the predefined limit, a control signal to a control function implemented in a core network of a second mobile communication network to request setting up resources in the core network of the second mobile communication network corresponding to the network node of the core network of the first mobile communication network to assign a service provision of the network node of the core network of the first communication network at least in part to occur from the core network of the second mobile communication network set up in response to the request indicated with the control signal.

The data descriptive of the operation of the network node of the first mobile communication network may correspond to data descriptive of signaling of the network node of the first mobile communication network.

For example, the network device may be configured to determine the indicator value to represent an amount of errors occurring in the signaling of the network node of the first mobile communication network.

Furthermore, the network device may further be configured to:
receive an acknowledgement from the control function implemented in the core network of the second mobile communication network, the acknowledgement at least comprising data indicating that the resources is set up to provide the network service corresponding to the network service provided by the network node of the core network of the first mobile communication network and data identifying the network node of the core network of the second mobile communication network assigned to the service provision, and
generate a control signal to at least one other network node of the core network of the first mobile communication network to assign the service provision the network node of the core network of the first mobile communication network to the network node of the core network of the second mobile communication network, the control signal carrying at least the data identifying the network node of the core network of the second mobile communication network assigned to the service provision.

Still further, the network device may further be configured to:
monitor, in response to assigning the service provision of the network node of the core network of the first communication network at least in part to occur from the core network of the second mobile communication network, the operation of a network node of the core network of the first mobile communication network,
generate, in response to a detection that the operation of the network node of the core network of the first mobile communication network meets at least one requirement, a control signal to the control function of the core network of the second mobile communication network to request a re-provision of the service from the network node of the core network of the first mobile communication network.

According to a third aspect, a computer program is provided, the computer program comprising instructions to cause a network device according to the second aspect as defined above to execute the method according to the first aspect as defined above.

According to a fourth aspect, a method for providing service to a first mobile communication network is provided, the method, performed by a control function implemented in a core network of a second mobile communication network, comprises:
receiving a signal from the first mobile communication network, the signal indicating a request to set up resources to provide a network service to the first mobile communication network, the signal comprises data indicative of a network node of the core network of the first mobile communication network,
generating a control signal to a network orchestrator function of the core network of the second mobile communication network to request a setup of the resources to provide service to the first mobile communication network, the control signal comprises data indicative of the network node of the core network of the first mobile communication network,
receiving, from the network orchestrator function, a confirmation indicative of the setup of the resources in the second mobile communication network corresponding to an operation of the network node of the core network of the first mobile communication network, and
generating an acknowledgement to the first mobile communication network to indicate that the resources are set up to provide the network service corresponding to the network service provided by the network node of the core network of the first mobile communication network and data identifying the network node of the core network of the second mobile communication network assigned to the service provision.

The method according to the fourth aspect may further comprise:
receiving a control signal from the control function of the core network of the first mobile communication network indicative of a request of re-provisioning of the service from the network node of the core network of the first mobile communication network,
generating, in response to the receipt of the control signal requesting the re-provisioning of the service from the network node of the core network of the first mobile communication network), a control signal to the network node of the core network of the second mobile communication network to release the service provisioning to the first mobile communication network.

According to a fifth aspect, a network device of a core network of a second mobile communication network, the network device configured to implement a control function, the network device configured to:
receive a signal from the first mobile communication network, the signal indicating a request to set up resources to provide a network service to the first mobile communication network, the signal comprises data indicative of a network node of the core network of the first mobile communication network,
generate a control signal to a network orchestrator function of the core network of the second mobile communication network to request a setup of the resources to provide service to the first mobile communication network, the control signal comprises data indicative of the network node of the core network of the first mobile communication network,
receiving, from the network orchestrator function, a confirmation indicative of the setup of the resources in the second mobile communication network corresponding to an operation of the network node of the core network of the first mobile communication network, and
generating an acknowledgement to the first mobile communication network to indicate that the resources are set up to provide the network service corresponding to the network service provided by the network node of the core network of the first mobile communication network and data identifying the network node of the core network of the second mobile communication network assigned to the service provision.

The network device according to the fifth aspect may further be configured to:
receive a control signal from the control function of the core network of the first mobile communication network indicative of a request of re-provisioning of the service from the network node of the core network of the first mobile communication network,
generate, in response to the receipt of the control signal requesting the re-provisioning of the service from the network node of the core network of the first mobile communication network, a control signal to the network node of the core network of the second mobile communication network to release the service provisioning to the first mobile communication network.

According to a sixth aspect, a computer program comprising instructions to cause a network device according to the fifth aspect as defined above to execute the method according to the fourth aspect as defined above.

According to a seventh aspect, a communication system is provided, the communication system comprising:
a first mobile communication network comprising a network device according to the second aspect as defined above, and
a second mobile communication network comprising a network device according to the fifth aspect as defined above.

The expression "a number of" refers herein to any positive integer starting from one, e.g. to one, two, or three.

The expression "a plurality of' refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication environment according to an example.
Figure 2 illustrates schematically a method according to an example.
Figure 3 illustrates schematically a method according to another example.
Figure 4 illustrates schematically an apparatus according to an example.
Figure 5 illustrates a flow chart according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

In broad terms, the present invention relates to a solution for acquiring resources from a core network of another mobile communication network in a case that a mobile communication network faces a predetermined situation, or situations, in a provision of communication service. In other words, by monitoring an operation of the mobile communication network a decision to request resources from another mobile communication network may be made and necessary measures may be taken.

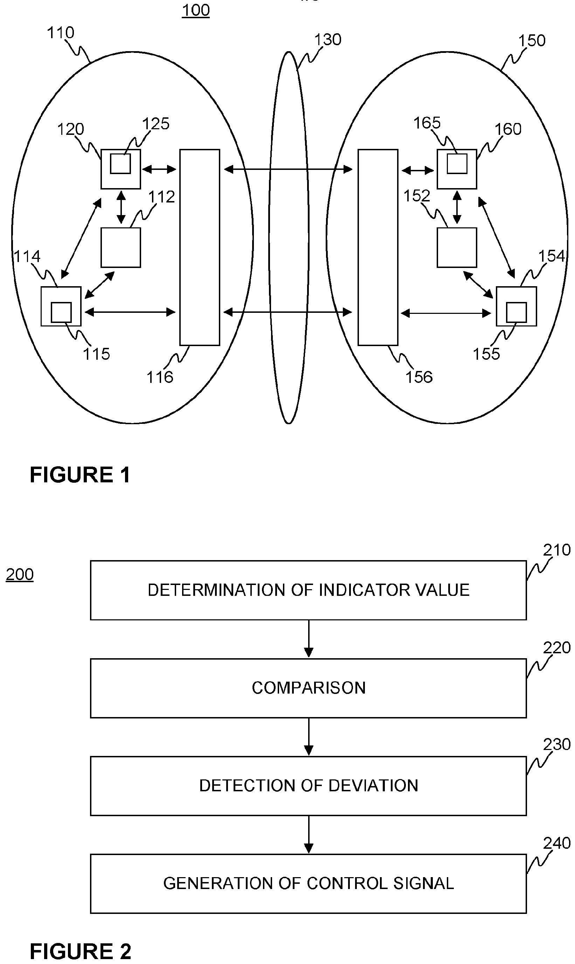

In the following at least some aspects of the present invention are described in an environment in which a first mobile communication network and a second mobile communication network are implementing at least so-called 5G communication technology. Thus, network architectures of the respective communication networks complies with the network architecture of the 5G communication network. Figure 1 illustrates schematically a communication system 100 depicting a part of core networks of the first mobile communication network 110 and a second mobile communication network 150 in order to describe at least some aspects of the present invention. As is known the network architecture of the 5G based communication networks is also called a Service-Based Architecture (SBA) wherein a plurality of network functions offer one or more services to other network functions with Application Programming Interfaces (API). For the purpose of describing the present invention it is assumed the relevant function in terms of evaluating an operation of the respective communication network 110, 150 is a network node referred as 112 in the core network of the first mobile communication network 110, which corresponds to a Policy Charging Function (PCF) as a non-limiting example. The corresponding network node in the core network of the second mobile communication 150 is denoted with 152 in Figure 1. As is known the Policy Charging Function supports a unified policy framework that governs network behavior. Thus, it provides policy rules to control plane function(s) to enforce them. The network node 112 implementing the PCF is communicatively connected to a network node referred with 114 in the first mobile communication network, 154 respectively in the second mobile communication network, which network nodes are configured to execute a Session Management Function (SMF) which is one of the main functions in the 5G architecture since it implements various operations relating to subscriber sessions, such as session establishment, modification and release. The network nodes 114, 154 may be communicatively connected to the respective control functions 125, 154 as illustrated in Figure 1. Moreover, the network nodes 114, 154 configured to execute the session management functions for the respective networks 110, 150 may also execute so-called network orchestrator functions referred with 115 and 155 in Figure 1. The network orchestrator functions 115, 155 may also be implemented as separate entities to the network nodes 114, 154. Still further, Figure 1 illustrates schematically interfaces referred with 116 and 156 in the figure, which may be considered as an interface called as a Security Edge Protection Proxy (SEPP) which protects control plane traffic exchanged between different 5G networks. Typical operations of the SEPP are message filtering, policing and topology hiding for all API messages. An IP Packet Exchange (IPX) 130 may be applied as an inter-operator interface between the mobile communication networks 110, 150 in order to route the data packets between the networks. Generally speaking the IPX 130 may provide services relating to quality and security for the interoperability of the various communication networks 110, 150.

In accordance with the present invention a new functionality is introduced in at least the first mobile communication network 110 but it may also be implemented in the second mobile communication network 150. The functionality is executed by a network device denoted with references 120 and 160 in the respective communication networks 110, 150 in Figure 1. The control functions are denoted with references 125 and 165, respectively. Thus, the control function 125, 165 executed by the network device 120, 160 is implemented in the core network in the respective mobile communication network 110, 150. Still further, the network devices 120, 160 arranged to implement the control function 125, 165 may be communicatively connected to each other over the interfaces 116, 156 and IPX 130 as shown in Figure 1. For example, the communication channel between the control functions 125, 165 may be implemented as a dedicated communication channel and agreed between the operators of the respective networks 110, 150. The control function 125 implemented with the network device 120 may be arranged to monitor an operation of the network node 112 in the core network of the first mobile communication network 110. Correspondingly, the control function 165 implemented with the network device 160 may be arranged to monitor an operation of the network node 152 in the core network of the second mobile communication network 150.

Next, at least some aspects of the invention are described by referring to Figure 2 which illustrates schematically a method 200 for controlling a service provision of a first mobile communication network 110. The method 200 is described from a perspective of a control function 125 implemented by a network device 120 residing in a core network of the first mobile communication network 110. As described, the control function 125 is arranged to monitor the operation of the network node 112 by accessing data descriptive of the operation of the network node 112. In accordance with some example embodiments such data may correspond to data descriptive of signaling of the network node 112 of the first mobile communication network 110.

Thus, the control function 125 of the network device 120 is configured to de-term ine 210, on the basis to the data descriptive of the operation of a network node 112 of the core network of the first mobile communication network 110, an indicator value indicative of the operation of the core network of the first mobile communication network 110. Here, the operation of the core network of the first mobile communication network 110 is represented by the operation of the monitored network node 112. In accordance with an embodiment of the invention the control function 125 may be arranged to determine 210 the indicator value by evaluating an amount of errors occurring in the signaling of the network node 112 of the first mobile communication network 110. The amount of errors may refer to a number of errors or to a type of errors or any combination of these, for example. The amount of errors may be collected in a continuous manner or by taking a sample over a predefined time window for determining the amount of errors during the time window in question.

Next, the control function 125 may be configured to compare 220 the indicator value to a reference value. The reference value is defined in accordance with a way the amount of errors are determined, i.e. the reference value is defined to be comparable with the way the errors are determined and defined. For example, the reference value may be expressed as a number of errors with the monitored time window or as a value also taking into account one or more quality factors, such as the types of errors therein.

In accordance with a comparison 220 between the indicator value and the reference value it is detected if the indicator value deviates from the reference value over a predefined limit. The predefined limit is expressed in an applicable way. Thus, the control function 125 executed by the network device 120 is configured to apply predefine rule, or rules, in order to detect 230 if the indicator value deviates from the reference value more than allowed and indicate such a deviation in order to take following steps as is described in the forthcoming description. For sake of completeness, it is worthwhile to mention that the wording that it is detected if the indicator value deviates from the reference value over a predefined limit shall be understood to cover any other approach taken in the comparison and detection, such as an arrangement in which some negative values are used and the detection occurs in case the indicator value is below the reference value. In other words, the detection is generated when the comparison 220 indicates that the indicator value is not allowable with respect to the predefined limit.

Furthermore, the control function 125 implemented in the core network of the first mobile communication network 110 is configured to generate, in response to a detection 230 that the deviation is over the predefined limit, a control signal to a control function 165 implemented in a core network of a second mobile communication network 150 to request setting up resources in the core network of the second mobile communication network 150 corresponding to the network node 112 of the core network of the first mobile communication network 110 to assign a service provision of the network node 112 of the core network of the first communication network 110 at least in part to occur from the core network of the second mobile communication network 150 set up in response to the request indicated with the control signal.

For example, the control function 165 of the core network of the second mobile communication network 150 may be configured to, in response to the setup of the resources, generate an acknowledgement to the control function 125 of the core network of the first mobile communication network 110. Thus, the control function 125 receives the acknowledgement from the control function 165 implemented in the core network of the second mobile communication network 150. In accordance with the embodiment the acknowledgement may be arranged at least to comprise data indicating that the resources is set up to provide the service corresponding to the service provided by the network node 112 of the core network of the first mobile communication network 110 and data identifying the network node 152 of the core network of the second mobile communication network 150 assigned to the service provision. Moreover, the control function 125 of the core network of the first mobile communication network 110 may be arranged to generate a control signal to at least one other network node 114 of the core network of the first mobile communication network 110 to assign the service provision from the network node 112 of the core network of the first mobile communication network 110 to the network node 152 of the core network of the second mobile communication network 150, the control signal carrying at least the data identifying the network node of the core network of the second mobile communication network 150 assigned to the service provision.

Still further, in accordance with some example embodiments the control function 125 of the core network of the first mobile communication network 110 may be arranged to continue monitoring of the network node 112 of the core network of the first mobile communication network 110 in response to assigning the service provision of the network node 112 of the core network of the first communication network 110 at least in part to occur from the core network of the second mobile communication network 150. In response to a detection that the network node 112 is returned to a normal operation, i.e. its operation meets predefined requirements, the control function 125 may be arranged to communicate it to the control function 165 of the core network of the second mobile communication network 150 by generating a control signal to the control function 165 to request the service provision back to be provided by the network node 112 of the core network of the first mobile communication network 110.

In the above given description it is mainly referred to an operation of the control function 125 in the first mobile communication network 110 executed by a network device 120. However, as described the second mobile communication network 150 is also arranged to execute the control function 165 being involved in an arrangement of service provision to the first mobile communication network 110 in the described manner when requested. In the foregoing description it is indicated that the control functions 125, 165 are communicatively connected to each other over an applicable communication interface. Moreover, in the foregoing description it is also indicated that the control function 165 of the core network of the second mobile communication network 150 is configured to arrange a resource allocation to support the operation of the first mobile communication network 110. The resource allocation may be arranged - as described - by assigning the network node 152 of the core network of the second mobile communication network 150 to provide service to the first mobile communication network 110 as described. Naturally, the network node 152 assignable to the task shall be capable of doing so and preferably its role in the second mobile communication network 150 corresponds to the role of the network node 112 in the first mobile communication network 110 in an operational sense, i.e. they preferable have the same functionalities in the respective networks 110, 150.

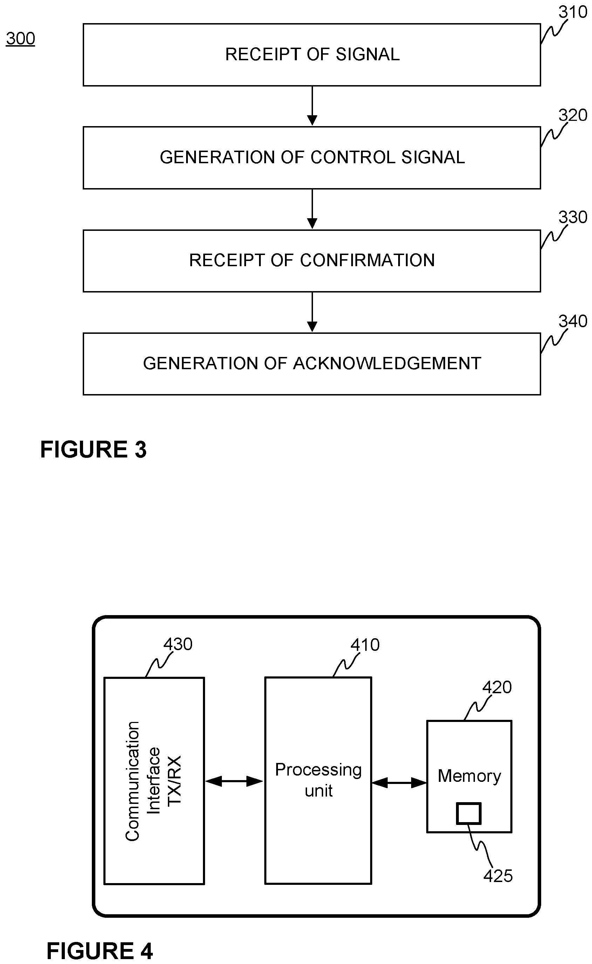

Now, the operation of the control function 165 executed by a network device 160 of the core network of the second mobile communication network 150 is further described by referring to Figure 3 schematically illustrating a method 300 implemented by the control function 165 according to an example. As said, the method 300 relates to a provision of a service to the first mobile communication network 110 performed by a control function 165 implemented in a core network of a second mobile communication network 150.

In step 310, the control function 165 receives a signal from the first mobile communication network 110, i.e. from the control function 125 implemented by a network device 120 residing in the core network of the first mobile communication network 110, wherein the signal carries data indicating that a setup of resources to provide a network service to the first mobile communication network 110 is requested. The signal also comprises data indicative of a network node 112 of the core network of the first mobile communication network 110 in order to indicate a type of resources requested. The data indicative of the network node 112 shall be understood in a broad manner and it may e.g. define the network node 112 with an identifier and/or it may define the network service, or the resource type, in a necessary manner so as enabling the control function 125 of the core network of the second mobile communication network 150 to derive the type of network service requested. In other words, the second control function 165 receives the signal from the first control function 125 and it indicates the need for resources and comprises data enabling a determination of the service type.

Following to the receipt 310 of the signal as described the second control function 165 is configured to generate 320 a control signal to a network orchestrator function 155 of the core network of the second mobile communication network 150 to request a setup of the resources to provide service to the first mobile communication network 110. The generation of the control signal by the second control function 165 comprises a definition of data to the control signal, which indicates, or identifies, the network node 112 of the core network of the first mobile communication network 110 whose operation is requested to be at least in part replaced with the resources of the second mobile communication network 150. In other words, the second control function 165 transmits the generated 320 control signal to an entity configured to execute the network orchestration in a manner as is described in the forthcoming description.

Namely, the network orchestrator function 155 is involved in an allocation of resources from the core network of the second mobile communication network 150 to be provided to the first mobile communication network 110 in accordance with the present invention, or at least with some embodiments of it. Hence, the network orchestrator function 155 is arranged to communicate with at least one other function executed in the core network of the second mobile communication network 150 in order to setup the resources to provide the service to the first mobile communication network 110. The at least one other function may be the network node 152 in the core network of the second mobile communication network 150 which performs the corresponding operation in the second core network to the operation of the network node 112 in the core network of the first mobile communication network 110. By means of the communication the network orchestrator function 155 may request, according to an embodiment, the network node 112 to allocate a part of its resources for applying by the first mobile communication network 110. Alternatively, the network orchestrator function 155 may setup a new instance to execute the operation as requested, i.e. corresponding to the operation of the network node 112 of the first mobile communication network 110. As a result, the core network of the second mobile communication network 150 may execute two corresponding functions, such as PCFs, wherein the first function serves the core network of the second mobile communication network 150 and the other is requested to be setup to serve the core network of the first mobile communication network 110. This kind of approach has an advantage that it enables keeping the communications of the first mobile communication network 110 and the second mobile communication network separate to each other and, thus, the subscribers of the second mobile communication network 150 are not anyhow affected. In response to the setting up of the resources for the core network of the first mobile communication network 110 as requested, the network orchestrator function 155 is arranged to generate a confirmation to the second control function 165 to indicate the setup of the resources in the second mobile communication network 150 corresponding to an operation of the network node 112 of the core network of the first mobile communication network 110 which confirmation is, thus, received 330 by the control function 165.

In response to the receipt 330 of the confirmation indicating the setup of the resources the control function 165 is configured to generate 340 an acknowledgement to the first mobile communication network 110 to indicate that the resources are set up to provide the network service corresponding to the network service provided by the network node 112 of the core network of the first mobile communication network 110 and data identifying the network node 152 of the core network of the second mobile communication network 150 assigned to the service provision. In other words, the acknowledgement generated by the second control function 165 corresponds to the one received by the first control function 125 as described in the foregoing description. Upon the receipt of the acknowledgement the first control function 125 and the second control function 165 may orchestrate a transfer of service provision from the network node 112 residing in the first mobile communication network 110 to the network node 154, or the dedicated instance, so that the service, or the functionality, of the network node 112 of the core network of the first mobile communication network 110 is provided from the core network of the second mobile communication network 150. In practice this means that the signaling of the network node 112 is transferred at least in part to the network node 152 in the second mobile communication network 150. The transfer of the responsibility may further require informing other entities in the core networks in both mobile communication networks 110, 150 on the new setup and, especially, on that an entity in the second mobile communication network 150 provides a certain service to the first mobile communication network 110. Such informing may comprise a generation of control signals to multiple network nodes wherein the control signals may carry data, such as network addresses and so on, to be taken into account in the respective network nodes. For example, the second control function 165 may be configured to generate a control signal to a firewall of the second mobile communication network 150 to allow an access from the core network of the first mobile communication network 110 to the second mobile communication network 150, and to a specific network entities therein, such as the network node 152 assigned to serve the first mobile communication network 110.

The method, performed by the control function 165 implemented by the network device 160 residing in the core network of the second mobile communication network 150, may further receive a control signal from the control function 125 of the core network of the first mobile communication network 110, wherein the control signal comprises data indicative of a request of re-provisioning of the service from the network node 112 of the core network of the first mobile communication network 110. Such a situation may e.g. be due a maintenance operation to the network node 112 which causes the network node 112 to operate in a normal way. Thus, in response to the receipt of the control signal the second control function 165 may be configured to generate a control signal to the network node 152 of the core network of the second mobile communication network 150 to release the service provisioning to the first mobile communication network 110. In other words, the control signal is generated to the network node 152 providing service to the first mobile communication network 110 as described and the aim is to release the service provision from the second mobile communication network 150.

In the foregoing description it is mainly referred to a situation that the network node 112 under focus is the Policy Charging Function (PCF) whose service may be transferred to the second mobile communication network 150. For sake of completeness it is worthwhile to mention that the same kind of approach may be applied in the context of other network nodes as well.

In the description herein it is referred to various network nodes 112, 114, 152, 154 and network devices 120, 160 configured to implement various functions as described. The respective entities may be implemented with one or more apparatuses suitable for practicing the embodiments as described. A non-limiting example of suitable apparatus is schematically illustrated in Figure 4. In other words, the apparatus may be configured to implement at least part of the methods as described. The execution of the respective methods, or at least some portions of them, may be achieved by arranging a processing unit 410 comprising at least one processor to execute at least some portion of computer program code 425 stored in at least one memory 420 causing the processor 410, and, thus, the apparatus to implement the method steps as described in order to execute the function as described. In other words, the processing unit 410 may be arranged to access the memory 420 and to retrieve and to store any information therefrom and thereto. Moreover, the processing unit 410 may be configured to control a communication through one or more communication interfaces 430 for accessing the other entities being involved in the operation, such as the data storage and the other nodes/devices in a manner as described in the description herein. Hence, the communication interface 430 may be arranged to implement, possibly under control of the processing unit 410, a number of communication protocols, such as an IP or any other communication protocol, for communicating with one or more entities to receive input and to output data as described. The term communication interface 430 shall be understood in a broad manner comprising necessary hardware and software elements for implementing the communication techniques. Further, the apparatus in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processing unit 410 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 420, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product which, when executed by at least one processor, cause an apparatus to perform at least some portions of the method as described. For example, the computer program product may comprise at least one computer-readable non-transitory medium having the computer program code 425 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer program.

Still further, the computer program code 425 may comprise a proprietary application, such as computer program code for generating the data record in the manner as described.

The computer program code 425 may also be considered to include the definitions and instructions of an execution of the application of the data record in a further use.

By referring to above the network devices 120, 160 implementing the control functions as described, but also the network nodes in the respective networks, may be configured to implement a predefined communication interface in order to communicate between the different mobile communication networks 110, 150. Such an interface may e.g. be so-called N32 interface dedicated to inter-operator communication, which may run over an IP network, such as the IPX as illustrated in Figure 1.

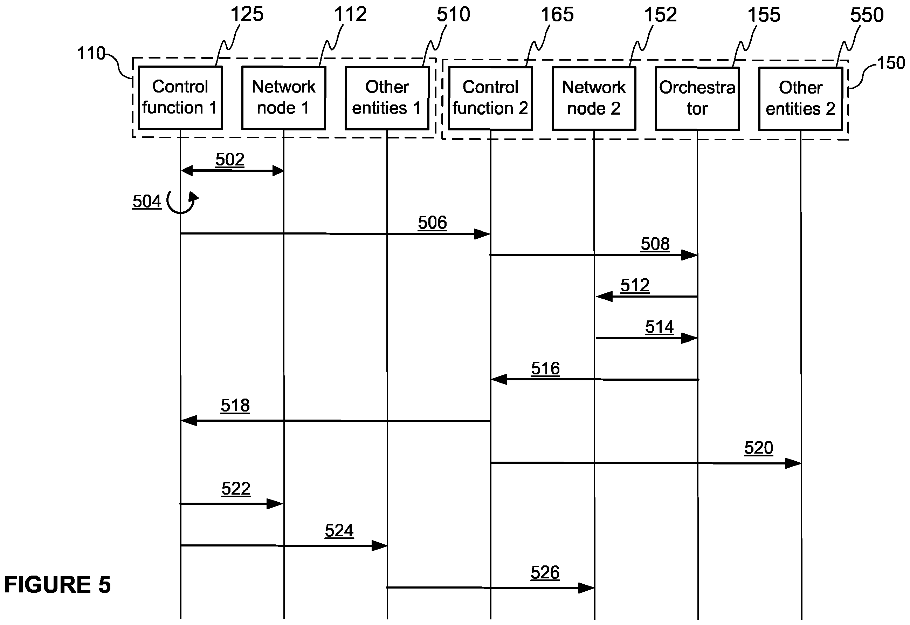

Figure 5 illustrates schematically a flow chart depicting aspects of the present invention as a system level. In the flow chart it is shown at least some relevant entities of the first mobile communication network 110 and the second mobile communication network 150 and the signals follow the steps of the method as described in the foregoing description. The signaling referred with 502 refers to a monitoring of the network node 112, such as PCF, by the control function 125 executed by a network device 120. In other words, the control function 125 communicates with the network node 112 of the core network of the first mobile communication network 110 in order to collect data for determining 210 an indicator value indicative of the operation of the network node 112, and, thus, the operation of the core network of the first mobile communication network 110. As described in the foregoing description the control function 125 may compare 220 the indicator value to a reference value and detect 230 if an unallowable deviation is present in the operation of the network node 112. In response to a detection that unallowable deviation is present the control function is arranged to generate 240 a control signal to a control function 165 executed in the core network of the second mobile communication network 150. The internal operation of the control function 125 in the first mobile communication network 110 is referred with a reference 504 and the generated control signal is referred with reference 506 in Figure 5.

In response to a receipt 310 of the control signal 506 the control function 165 in the second mobile communication network 150 is configured to analyze the signal and derive if the received signal comprises data indicating that the control function 125 of the first mobile communication network 110 requests resources from the second mobile communication network 150. In such a case the control function 165 executed in the second mobile communication network 150 is configured to generate 320 a control signal 508 to a network orchestrator function 155 which is a function that may control an operation of the core network of the second mobile communication network 150 at least to some extent. The network orchestrator function 155 may take necessary actions in order to setup the resources for the first mobile communication network 110 as requested. In Figure 5 the network orchestrator function 155 is configured to generate a control signal 512 to a network node 152 of the core network of the second mobile communication network 150 in order to request a setup of the resources to provide the service to the first mobile communication network. The control signal 512 may comprise data defining in one way or another the service, such as by carrying data indicative of the network node 112 of the first mobile communication network 110. Alternatively or in addition, the control signal 512 may cause an establishment of a resource corresponding to the network node 152 which is dedicated to serve the first mobile communication network 110 whereas a network node 152 of the second mobile communication network 150 remains to serve only the second mobile communication network 150 as already described. In response to that the requested resources are set up, the network node 152 may generate a signal 514 to confirm the setup of the resources. In response to the receipt of the confirmation the network orchestrator function 155 may be configured to confirm it to the control function 165 of the core network of the second mobile communication network 150 (cf. signal denoted with 516 in Figure 5). Furthermore, the control function 165 is configured to generate an acknowledgement signal 518 to the control function 125 executed in the first mobile communication network 110. The control function 520 may also generate a signal 520 to other functions and entities 550 operating in the second mobile communication network 150, such as to a firewall to enable access from the first mobile communication therein. Correspondingly, in response to the receipt of the acknowledgement signal 518 the control function 125 of the first mobile communication network 110 may take necessary measures to cause a transfer of the service provision of the network node 112 at least in part to the resources obtained from the core network of the second mobile communication network 150. The measures may e.g. comprise a generation of a control signal to the network node 112 in order to inform it on the situation and cause it to operate in a desired manner, such as setting it to a certain state, such as to a maintenance state. Moreover, the control function 125 may generate a control signal 524 to one or more other entities and functions 510 in order to inform the other entities on the change of the service provision. The control signal 524 advantageously carries necessary information to the relevant entities in order to cause signaling from the first mobile communication network 110 to the resources set up in the second mobile communication network 150, such as the network node 152. The reference 526 in Figure 5 illustrates the signaling in accordance with the new setup in which the resources of the core network of the second mobile communication network 150 as setup are utilized.

Correspondingly, the release of the service provision may be implemented in the system level with the signaling between the entities as shown in Figure 5 and, hence, to return the operation of the first mobile communication network 110 normal.

The advantages of the invention are various. Naturally, the invention improves an operation of the mobile communication networks 110, 150 since it aims to guarantee resources even in a situation in which one of the networks 110, 150 is experiencing challenges in a service provision. More specifically and as derivable from the foregoing description the invention defines a single function dedicated to the very complex tasks that may comprise identifying a crucial core network function failure, asking for resources in another network, temporarily routing traffic to that network and then returning everything back to normal once the failure is successfully fixed. This avoids being hooked on a tailored network vendor specific proprietary functions performing the same tasks. In practice, the invention allows two telecom operators to exchange crucial core network functions, regardless of where they are and what vendor they are using as long as both operators have a dedicated control function, which may be called as a Service Continuity Plan Function (SCPF), in place. For example roaming partners in different countries via "international roaming mode", allowing visited network to keep income produced by inbound roamers and home network to keep their roamers happy. The solution in accordance with the invention from a technical point of view allows a feasible way to fulfill regulatory requirements on national autonomy in a crisis situation via so called "national interconnection mode". Implementing the invention with so-called "push approach" or "push mode" allows a telecom operator to allocate a complete temporary host network for their customers, especially in a case of them roaming in another country. This can be used as a proactive measure against any potential network node or international IP connection failures. In addition to solving network connectivity problems, the "push approach" may be used for reducing the amount of signaling traffic as well as drive down the latency for signaling between VPLMN and HPLMN. This is beneficial both from technical and commercial perspectives. The solution according to the present invention is also applicable in the private network scenarios where a small corporate network operator could temporarily outsource a part their core network functionality to the macro network operator e.g. during expected or unexpected downtime. Still further, the invention may also be used to solve a case where 5/6G NTN satellite connection fails due to bad connection between land based home operator core network and satellite based NTN operator, by copy/pasting crucial core network virtualized functions directly into the satellite itself. Based on the above-mentioned non-limiting examples the present invention brings various advantages and improve a service capability of the telecom operators.

The specific examples provided in the description given above should not be construed as limiting the applicability and/or the interpretation of the appended claims. Lists and groups of examples provided in the description given above are not exhaustive unless otherwise explicitly stated.

## Claims

1. A method (200) for controlling a service provision of a first mobile communication network (110), the method, performed by a control function (125) implemented in a core network of the first mobile communication network (110), comprises:
determining (210), on the basis to data descriptive of an operation of a network node (112) of the core network of the first mobile communication network (110), an indicator value indicative of the operation of the core network of the first mobile communication network (110),
comparing (220) the indicator value to a reference value,
detecting (230), in accordance with a comparison between the indicator value and the reference value, if the indicator value deviates from the reference value over a predefined limit, and
generating (240), in response to a detection that the deviation is over the predefined limit, a control signal to a control function (165) implemented in a core network of a second mobile communication network (150) to request setting up resources in the core network of the second mobile communication network (150) corresponding to the network node (112) of the core network of the first mobile communication network (110) to assign a service provision of the network node (112) of the core network of the first communication network (110) at least in part to occur from the core network of the second mobile communication network (150) set up in response to the request indicated with the control signal.

2. The method (200) according to claim 1, wherein the data descriptive of the operation of the network node (112) of the first mobile communication network (110) corresponds to data descriptive of signaling of the network node (112) of the first mobile communication network (110).

3. The method (200) according to any of the preceding claims, wherein the indicator value is determined to represent an amount of errors occurring in the signaling of the network node (112) of the first mobile communication network (110).

4. The method (200) according to any of the preceding claims, the method (200) further comprising:
receiving an acknowledgement from the control function (165) implemented in the core network of the second mobile communication network (150), the acknowledgement at least comprising data indicating that the resources is set up to provide the network service corresponding to the network service provided by the network node (112) of the core network of the first mobile communication network (110) and data identifying the network node (152) of the core network of the second mobile communication network (150) assigned to the service provision, and
generating a control signal to at least one other network node (114) of the core network of the first mobile communication network (110) to assign the service provision the network node (112) of the core network of the first mobile communication network (110) to the network node (152) of the core network of the second mobile communication network (150), the control signal carrying at least the data identifying the network node (152) of the core network of the second mobile communication network (150) assigned to the service provision.

5. The method (200) according to any of the preceding claims, the method (200) further comprising:
monitoring, in response to assigning the service provision of the network node (112) of the core network of the first communication network (110) at least in part to occur from the core network of the second mobile communication network (150), the operation of a network node (112) of the core network of the first mobile communication network (110),
generating, in response to a detection that the operation of the network node (112) of the core network of the first mobile communication network (110) meets at least one requirement, a control signal to the control function (165) of the core network of the second mobile communication network (150) to request a re-provision of the service from the network node (112) of the core network of the first mobile communication network (110).

6. A network device (120) of a core network of a first mobile communication network (110), the network device (120) configured to implement a control function (125), the network device (120) configured to:
determine (210), on the basis to data descriptive of an operation of a network node (112)ofthe core network of the first mobile communication network (110), an indicator value indicative of the operation of the core network of the first mobile communication network (110),
compare (220) the indicator value to a reference value,
detect (230), in accordance with a comparison between the indicator value and the reference value, if the indicator value deviates from the reference value over a predefined limit, and
generate (240), in response to a detection that the deviation is over the predefined limit, a control signal to a control function (165) implemented in a core network of a second mobile communication network (150) to request setting up resources in the core network of the second mobile communication network (150) corresponding to the network node (112) of the core network of the first mobile communication network (110) to assign a service provision of the network node (112) of the core network of the first communication network (110) at least in part to occur from the core network of the second mobile communication network (150) set up in response to the request indicated with the control signal.

7. The network device (120) according to claim 6, wherein the data descriptive of the operation of the network node (112) of the first mobile communication network (110) corresponds to data descriptive of signaling of the network node (112) of the first mobile communication network (110).

8. The network device (120) according to claim 6 or claim 7, wherein the network device (120) is configured to determine the indicator value to represent an amount of errors occurring in the signaling of the network node (112) of the first mobile communication network (110).

9. The network device (112) according to any of the preceding claims 6 to 8, the network device (112) further configured to:
receive an acknowledgement from the control function (165) implemented in the core network of the second mobile communication network (120), the acknowledgement at least comprising data indicating that the resources is set up to provide the network service corresponding to the network service provided by the network node (112) of the core network of the first mobile communication network (110) and data identifying the network node (152) of the core network of the second mobile communication network (150) assigned to the service provision, and
generate a control signal to at least one other network node (114) of the core network of the first mobile communication network (110) to assign the service provision the network node (112) of the core network of the first mobile communication network (110) to the network node (152) of the core network of the second mobile communication network (150), the control signal carrying at least the data identifying the network node (152) of the core network of the second mobile communication network (150) assigned to the service provision.

10. The network device (120) according to any of the preceding claims 6 to 9, the network device (120) further configured to:
monitor, in response to assigning the service provision of the network node (112) of the core network of the first communication network (110) at least in part to occur from the core network of the second mobile communication network (150), the operation of a network node (112) of the core network of the first mobile communication network (110),
generate, in response to a detection that the operation of the network node (112) of the core network of the first mobile communication network (110) meets at least one requirement, a control signal to the control function (165) of the core network of the second mobile communication network (150) to request a re-provision of the service from the network node (112) of the core network of the first mobile communication network (110).

11. A computer program comprising instructions to cause a network device (120) according to claim 6 to execute the method according to any one of the claims 1 to 5.

12. A method (300) for providing service to a first mobile communication network (110), the method (300), performed by a control function (165) implemented in a core network of a second mobile communication network (150), comprises:
receiving (310) a signal from the first mobile communication network (110), the signal indicating a request to set up resources to provide a network service to the first mobile communication network (110), the signal comprises data indicative of a network node (112) of the core network of the first mobile communication network (110),
generating (320) a control signal to a network orchestrator function (155) of the core network of the second mobile communication network (150) to request a setup of the resources to provide service to the first mobile communication network (110), the control signal comprises data indicative of the network node (112) of the core network of the first mobile communication network (110),
receiving (330), from the network orchestrator function (155), a confirmation indicative of the setup of the resources in the second mobile communication network (150) corresponding to an operation of the network node (112) of the core network of the first mobile communication network (110), and
generating (340) an acknowledgement to the first mobile communication network (110) to indicate that the resources are set up to provide the network service corresponding to the network service provided by the network node (112) of the core network of the first mobile communication network (110) and data identifying the network node (152) of the core network of the second mobile communication network (150) assigned to the service provision.

13. The method (300) according to claim 12, the method further comprising:
receiving a control signal from the control function (125) of the core network of the first mobile communication network (110) indicative of a request of re-provisioning of the service from the network node (112) of the core network of the first mobile communication network (110),
generating, in response to the receipt of the control signal requesting the re-provisioning of the service from the network node (112) of the core network of the first mobile communication network (110), a control signal to the network node (152) of the core network of the second mobile communication network (150) to release the service provisioning to the first mobile communication network (110).

14. A network device (160) of a core network of a second mobile communication network (150), the network device (160) configured to implement a control function (165), the network device (160) configured to:
receive (310) a signal from the first mobile communication network (110), the signal indicating a request to set up resources to provide a network service to the first mobile communication network (110), the signal comprises data indicative of a network node (112) of the core network of the first mobile communication network (110),
generate (320) a control signal to a network orchestrator function (155) of the core network of the second mobile communication network (150) to request a setup of the resources to provide service to the first mobile communication network (110), the control signal comprises data indicative of the network node (112) of the core network of the first mobile communication network (110),
receive (330), from the network orchestrator function (155), a confirmation indicative of the setup of the resources in the second mobile communication network (150) corresponding to an operation of the network node (112) of the core network of the first mobile communication network (110), and
generate (340) an acknowledgement to the first mobile communication network (110) to indicate that the resources are set up to provide the network service corresponding to the network service provided by the network node (112) of the core network of the first mobile communication network (110) and data identifying the network node (152) of the core network of the second mobile communication network (150) assigned to the service provision.

15. The network device (160) according to claim 14, the network device (160) further configured to:
receive a control signal from the control function (125) of the core network of the first mobile communication network (110) indicative of a request of re-provisioning of the service from the network node (112) of the core network of the first mobile communication network (110),
generate, in response to the receipt of the control signal requesting the re-provisioning of the service from the network node (112) of the core network of the first mobile communication network (110), a control signal to the network node (152) of the core network of the second mobile communication network (150) to release the service provisioning to the first mobile communication network (110).

16. A computer program comprising instructions to cause a network device (160) according to claim 14 to execute the method according to any one of the claims 12 to 13.

17. A communication system (100) comprising:
a first mobile communication network (110) comprising a network device (120) according to any of the claims 6 to 10, and
a second mobile communication network (150) comprising a network device (160) according to any of claims 14 to 15.
